# EUROPEAN PATENT SPECIFICATION

(11) **EP 1 734 076 B1**
(45) Date of publication and mention of the grant of the patent: **16.07.2008**
(21) Application number: 06252969.8
(22) Date of filing: 08.06.2006
(51) Int. Cl.: C08L 67/02, C08L 69/00, C08J 5/04, C08K 3/40

(54) **Glass fiber thermoplastic composite**
Glasfaserverstärktes thermoplastistisches Verbundmaterial
Matériau composite à fibre de verre et polymère thermoplastique

(30) Priority: 17.06.2005 US 691492 P; 21.11.2005 US 284080
(43) Date of publication of application: 20.12.2006
(73) Proprietor: General Electric Company, Schenectady, NY 12345 (US)
(72) Inventor: Gaggar, Satish Kumar, Parkersburg, West Virginia 26101 (US); Chakravarti, Shreyas, Evansville, Indiana 47712 (US); Arnould, Dominique Daniel, 4661 RG Halsteren (NL); Gautam, Keshav S., Evansville, Indiana 47712 (US)
(74) Representative: Müller, Frank Peter

(56) References cited:
- WO-A-03/106562
- WO-A-20/06012466
- US-A- 5 859 119

## Description

### BACKGROUND OF THE INVENTION

Glass fiber thermoplastic composites are used extensively in industry but are generally opaque/translucent therefore depriving articles made therefrom from good surface appearance and depth of color. Such articles have difficulty in achieving visual effects as well.

We have discovered a new composite with increased clarity and transparency of the glass fiber blends so as to enhance their colorability and surface appearance. The composite provides a better platform for visual effects. Importantly and surprisingly higher mechanical performance is maintained even though the polycarbonate quantity is reduced and the polyester is increased.

### SUMMARY OF THE INVENTION

In accordance with the invention there is a transparent or translucent composition comprising
a. aromatic polycarbonate (PC) and poly(1,4-cyclohexane dimethylene 1,4-cyclohexanedicarboxylate) hereinafter referred to as (PCCD), the weight ratio of PC to PCCD in the range of 30 to 85 PC to 70 to 15 PCCD,
b. glass fiber at least about 0.75 mm in length the quantity of glass fiber from about 1 to about 50 wt.% of the composition,
c. the refractive index of the PC/PCCD mixture and the glass fiber matched between the range of about 1.540 to about 1.570.

An additional aspect of the invention is a combination of copolyestercarbonate together with PCCD and glass fiber, the copolyester carbonate to PCCD weight ratio and the glass fiber minimum length, and wt.% being in the same ranges as previously disclosed except refractive index which is from 1.508 to about 1.585. The ester in the copolyestercarbonate is preferably the residue of an aromatic dicarboxylic acid and a diol, for example bisphenol A. Particularly preferred is the ester bond from the residue of an aromatic dicarboxylic acid such as terephthalic acid and a diol such as resorcinol, e.g. 1,3-resorcinol.

### DETAILED DESCRIPTION OF THE INVENTION

The aromatic polycarbonate employed in the invention is prepared by reacting a dihydric phenol with a carbonate precursor. The dihydric phenol which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are: 2,2-bis(4-hydroxyphenyl) propane; hydroquinone; resorcinol; 2,2-bis(4-hydroxyphenyl) pentane; 2,4'-(dihydroxydiphenyl) methane; bis(2 hydroxyphenyl) methane; bis(4 -hydroxyphenyl) methane; 1,1-bis(4-hydroxyphenyl)-3,3,5-trimethylcyclohexane; fluorenone bisphenol, 1,1-bis(4-hydroxyphenyl) ethane; 3,3-bis(4-hydroxyphenyl) pentane; 2,2-dihydroxydiphenyl; 2,6-dihydroxynaphthalene; bis(4-hydroxydiphenyl)sulfone; bis(3,5-diethyl-4-hydroxyphenyl)sulfone; 2,2-bis(3,5-dimethyl-4-hydroxyphenyl)propane; 2,4'-dihydroxydiphenyl sulfone; 5'-chloro-2,4'-dihydroxydiphenyl sulfone; bis-(4-hydroxyphenyl)diphenyl sulfone; 4,4'-dihydroxydiphenyl ether; 4,4'-dihydroxy-3,3'-dichlorodiphenyl ether; 4,4-dihydroxy-2,5-diphenyl ether; and the like. Other dihydric phenols used in the preparation of the above polycarbonates are disclosed in U.S. Pat Nos. 2,999,835; 3,038,365; 3,334,154; and 4,131,575.

Aromatic polycarbonates can be manufactured by known processes; such as, for example and as mentioned above, by reacting a dihydric phenol with a carbonate precursor, such as phosgene, in accordance with methods set forth in the above-cited literature and in U.S. Pat. No. 4,123,436, or by transesterification processes such as are disclosed in U.S. Pat. No. 3,153,008, as well as other processes known to those skilled in the art.

It is also possible to employ two or more different dihydric phenols or a copolymer of a dihydric phenol with a glycol or with a hydroxy- or acid-terminated polyester or with a dibasic acid in the event a carbonate copolymer or interpolymer rather than a homopolymer is desired for use in the preparation of the polycarbonate mixtures of the invention. Branched polycarbonates are also useful, such as are described in U.S. Pat. No. 4,001,184. Also, there can be utilized blends of linear polycarbonate and a branched polycarbonate. Moreover, blends of any of the above materials may be employed in the practice of this invention to provide the aromatic polycarbonate.

One aromatic carbonate is a homopolymer, e.g., a homopolymer derived from 2,2-bis(4-hydroxyphenyl)propane (bisphenol-A) and phosgene, commercially available under the trade designation LEXAN Registered TM from General Electric Company.

Branched polycarbonates are prepared by adding a branching agent during polymerization. These branching agents are well known and may comprise polyfunctional organic compounds containing at least three functional groups which may be hydroxyl, carboxyl, carboxylic anhydride, haloformyl and mixtures thereof. Specific examples include trimellitic acid, trimellitic anhydride, trimellitic trichloride, tris-p-hydroxy phenyl ethane, isatin-bis-phenol,tris-phenol TC (1,3,5-tris((p-hydroxyphenyl)isopropyl)benzene),tris-phenol PA (4(4(1,1-bis(p-hydroxyphenyl)-ethyl)alpha, alpha-dimethyl benzyl)phenol), 4-chloroformyl phthalic anhydride, trimesic acid and benzophenone tetracarboxylic acid. The branching agent may be added at a level of about 0.05-2.0 weight percent. Branching agents and procedures for making branched polycarbonates are described in U.S. Pat. Nos. 3,635,895; 4,001,184; and 4,204,047.

Since relatively high melt flow is an important characteristic of the blend, a relatively low to moderate intrinsic viscosity (IV) aromatic polycarbonate is preferred having an IV of from about 42 to about 50 ml/g as measured in methylene chloride at 25°C.

A preferred IV is from about 44 to about 48 ml/g, more preferred about 46.5 to 47.5 ml/g.

The quantity of aromatic polycarbonate employed in the composition is from about 50 to about 80 wt.% of the composition, preferably about 55 to about 75 wt.%. The preferred aromatic polycarbonate is bisphenol A polycarbonate in a high or highest optical grade such as OQ1030, OQ3820 and the like available from GE Plastics. This is an aromatic polycarbonate end-capped with para cumyl phenol with a molecular weight determined by gas phase chromatography in methylene chloride of about 17,000 to about 37,000 and a refractive index of 1.586.

Copolyestercarbonates can also be employed in the invention in addition to or in replacement of polycarbonate. The ester bond can be supplied through the residue of a dicarboxylic acid, preferably aromatic, and a diol molecule such as bisphenol A or a resorcinol. The preferred ester bonds are formed from an aromatic dicarboxylic acid such as the residue of terephthalic acid, isophthalic acid or mixtures thereof and resorcinol such as 1,3-resorcinol. Copolyestercarbonates with blocks of the ester groups are preferable. Those molecules are well known in the polymer art. The preferred materials are disclosed in patents such as US patent 6,559,270 B1 and 6,627,303 B1. These materials are sold through GE Advanced Materials as Sollx resins.

PCCD referred to above is poly(1,4-cyclohexylenedimethylene 1,4-cyclohexanedicarboxylate) also sometimes referred to as poly(1,4-cyclohexenedimethanol-1,4-dicarboxylate) which has recurring units of the formula: 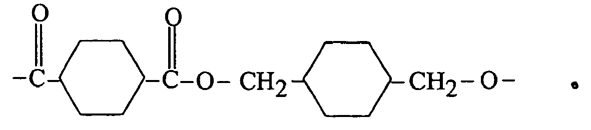 and modifications of PCCD with various diols or polytetrahydrofuran co-monomers.

The PCCD employed is a standard PCCD available from Eastman Chemical. It has a molecular weight of about 41,000 to 60,000 and a refractive index of about 1.506 to about 1.508.

The glass fiber which can be employed is any fiber and coating that satisfies the refractive index when combined with the resins employed. A standard E fiber can be used which has a refractive index of about 1.558. In addition glass fibers with other refractive indices can be used such as non-alkali metal based borosilicate glass, alkali earth based borosilicate glass, alkali lead silicate glasses and glasses with high zirconia content.

About 1 to about 50 wt.% of the composition is glass fiber, preferably about 5 to about 30 wt.%. A minimum length of the glass fiber is above about 0.75 mm, preferably above about 1.0 mm.

This glass composite can be used in many applications, which require good mechanical properties combined with good optical and aesthetic properties. Examples of such applications include injection molding, film extrusion, and composite applications such as continuous fiber extrusion and pultrusion processes. Examples of such application types are found in US Patent 5,039,566 and US Patent 5,665,450.

In addition to the above components of the invention, other resins can be present. For examples, polyester resin components typically comprises structural units of the following formula can be present: 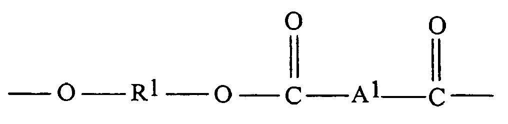 wherein each R¹ is independently a divalent aliphatic, alicyclic or aromatic hydrocarbon or polyoxyalkylene radical, or mixtures thereof and each A¹ is independently a divalent aliphatic, alicyclic or aromatic radical, or mixtures thereof. Examples of suitable polyesters containing the structure of the above formula are poly(alkylene dicarboxylates), liquid crystalline polyesters, and polyester copolymers. It is also possible to use branched polyester in which a branching agent, for example, a glycol having three or more hydroxyl groups or a trifunctional or multifunctional carboxylic acid has been incorporated. Furthermore, it is sometimes desirable to have various concentrations of acid and hydroxyl end groups on the polyester, depending on the ultimate end-use of the composition.

The R¹ radical may be, for example, a C₂₋₁₂ alkylene radical, a C₆₋₁₂ alicyclic radical, a C₆₋₂₀ aromatic radical or a polyoxyalkylene radical in which the alkylene groups contain about 2-6 and most often 2 or 4 carbon atoms. The A¹ radical in the above formula is most often p- or m-phenylene, a cycloaliphatic or a mixture thereof. This class of polyester includes the poly(alkylene terephthalates) and the polyarylates. Such polyesters are known in the art as illustrated by the following patents, which are incorporated herein by reference.

| | | | |
|---|---|---|---|
| 2,465,319 | 2,720,502 | 2,727,881 | 2,822,348 |
| 3,047,539 | 3,671,487 | 3,953,394 | 4,128,526 |

Examples of aromatic dicarboxylic acids represented by the dicarboxylated residue A¹ are isophthalic or terephthalic acid, 1,2-di(p-carboxyphenyl)ethane, 4,4'-dicarboxydiphenyl ether, 4,4' bisbenzoic acid and mixtures thereof. Acids containing fused rings can also be present, such as in 1,4- 1,5- 2,7- or 2,6-naphthalenedicarboxylic acids. The preferred dicarboxylic acids are terephthalic acid, isophthalic acid, naphthalene dicarboxylic acid, cyclohexane dicarboxylic acid or mixtures thereof.

Polyesters include poly(ethylene terephthalate) ("PET"), and poly(1,4-butylene terephthalate), ("PBT"), poly(ethylene naphthanoate) ("PEN"), poly(butylene naphthanoate), ("PBN") and poly(propylene terephthalate) ("PPT"), and mixtures thereof.

Polyesters also include resins comprised of terephthalic acid, 1,4-cyclohexanedimethanol and ethylene glycol for example PCTG, PETG, PCTA, PCT resins which are available from the Eastman Chemical Company.

Polyesters may include minor amounts, e.g., from about 0.5 to about 5 percent by weight, of units derived from various aliphatic acid and/or aliphatic polyols to form copolyesters. The aliphatic polyols include glycols, such as poly(ethylene glycol) or poly(butylene glycol). Such polyesters can be made following the teachings of, for example, U.S. Pat. Nos. 2,465,319 and 3,047,539.

Polyesters in this process can have an intrinsic viscosity of from about 0.4 to about 2.0 dl/g as measured in a 60:40 phenol/tetrachloroethane mixture or similar solvent at 23°-30° C.

Recycled polyesters and blends of recycled polyesters with virgin polyester can be used.

An aromatic polyester such as a polyethylene terephthalate has an I.V. of about 0.52 to about 0.62 dl/g, preferably 0.54 to about 0.60 as measured in a 60:40 phenol/tetrachloroethane mixture or similar solvent at 23-30°C.

Further additional resins that can be present are rubbery impact modifiers. The rubbery impact modifiers generally comprise an acrylic or methyacrylic grafted polymer with a conjugated diene or an acrylate elastomer, alone, or copolymerized with a vinyl aromatic compound. Particularly useful are the core-shell polymers of the type available from Rohm & Haas, for example, those sold under the trade designation Acryloid®. In general these impact modifiers contain units derived from butadiene or isoprene, alone or in combination with a vinyl aromatic compound, or butyl acrylate, alone or in combination with a vinyl aromatic compound. The aforementioned impact modifiers are believed to be disclosed in fromuth et. Al., U.S. Pat. No. 4,180,494; Owens, U.S. Pat. No. 3,808,180; Farnham et al., U.S. Pat. No. 4,096,202; and Cohen et. al., U.S. Pat. No. 4,260,693. Most preferably, the impact modifier will comprise a two-stage polymer having either a butadiene or butyl acrylate based rubbery core and a second stage polymerized from methylmethacrylate alone, or in combination with styrene. Also present in the first stage are crosslinking and/or graftlinking monomers. Examples of the crosslinking monomers include 1.3-butylene diacrylate, divinyl benzene and butylenes dimethacrylate. Examples of graftlinking monomers are allyl acrylate, allyl methacrylate and diallyl maleate.

From an aesthetic standpoint, the use of color pigments for visual purposes should be noted. In general, the pigment may be a metallic-effect pigment, a metal oxide-coated metal pigment, a plate like graphite pigment, a plate like molybdenum disulfide pigment, a pearlescent mica pigment, a metal oxide-coated mica pigment, an organic effect pigment, a layered light interference pigment, a polymeric holographic pigment or a liquid crystal interference pigment. Preferably, the pigment is a metal effect pigment selected from the group consisting of aluminum, gold, brass and copper metal effect pigments; especially aluminum metal effect pigments. Alternatively, preferred effect pigments are pearlescent mica pigments or a large particle size, preferably platelet type, organic effect pigment selected from the group consisting of copper phthalocyanine blue, copper phthalocyanine green, carbazole dioxazine, diketopyrrolopyrrole, iminoisoindoline, iminoisoindolinone, azo and quinacridone effect pigments.

Suitable colored pigments especially include organic pigments selected from the group consisting of azo, azomethine, methine, anthraquinone, phthalocyanine, perinone, perylene, diketopyrrolopyrrole, thioindigo, dioxazine iminoisoindoline, dioxazine, iminoisoindolinone, quinacridone, flavanthrone, indanthrone, anthrapyrimidine and quinophthalone pigments, or a mixture or solid solution thereof; especially a dioxazine, diketopyrrolopyrrole, quinacridone, phthalocyanine, indanthrone or iminoisoindolinone pigment, or a mixture or solid solution thereof. Colored organic pigments of particular interest include C.I. Pigment Red 202, C.I. Pigment Red 122, C.I. Pigment Red 179, C.I. Pigment Red 170, C.I. Pigment Red 144, C.I. Pigment Red 177, C.I. Pigment Red 254, C.I. Pigment Red 255, C.I.
Pigment Red 264, C.I. Pigment Brown 23, C.I. Pigment Yellow 109, C.I. Pigment Yellow 110, C.I. Pigment Yellow 147, C.I. Pigment Orange 61, C.I. Pigment Orange 71, C.I. Pigment Orange 73, C.I. Pigment Orange 48, C.I. Pigment Orange 49, C.I. Pigment Blue 15, C.I. Pigment Blue 60, C.I. Pigment Violet 23, C.I. Pigment Violet 37, C.I. Pigment Violet 19, C.I. Pigment Green 7, C.I. Pigment Green 36, or a mixture or solid solution thereof. Suitable colored pigments also include inorganic pigments; especially those selected from the group consisting of metal oxides, antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate and mixed metal oxides.

Most preferably, the colored pigment is a transparent organic pigment. Pigment compositions wherein the colored pigment is a transparent organic pigment having a particle size range of below 0.2 µm, preferably below 0.1 µm, are particularly interesting. For example, pigment compositions containing, as transparent organic pigment, the transparent quinacridones in their magenta and red colors, the transparent yellow pigments, like the isoindolinones or the yellow quinacridone/quinacridonequinone solid solutions, transparent copper phthalocyanine blue and halogenated copper phthalocyanine green, or the highly-saturated transparent diketopyrrolopyrrole or dioxazine pigments are particularly interesting. Typically the pigment composition is prepared by blending the pigment with the filler by known dry or wet mixing techniques. For example, the components are wet mixed in the end step of a pigment preparatory process, or by blending the filler into an aqueous pigment slurry, the slurry mixture is then filtered, dried and micropulverized.

In a preferred method, the pigment is dry blended with the filler in any suitable device which yields a nearly homogenous mixture of the pigment and the filler. Such devices are, for example, containers like flasks or drums which are submitted to rolling or shaking, or specific blending equipment like for example the TURBULA mixer from W. Bachofen, CH-4002 Basel, or the P-K TWIN-SHELL INTENSIFIER BLENDER from Patterson-Kelley Division, East Stroudsburg, Pa. 18301.

The pigment compositions are generally used in the form of a powder which is incorporated into a high-molecular-weight organic composition, such as a coating composition, to be pigmented. The pigment composition comprises, consists of or consists essentially of the filler and colored pigment, as well as customary additives for pigment compositions. Such customary additives include texture-improving agents and/or antiflocculating agents.

The combination of resin and glass employed in these compositions permits the use of relatively high quantities of glass and PCCD while still maintaining very good mechanical properties, particularly impact resistance. The use of glass fiber above a certain minimum length matched with the appropriate refractive index of the polymer system seems to account for the outstanding balance of properties, particularly the maintenance of excellent mechanical properties such as modulus and impact strength. When glass fiber is below about 0.75 mm in length and down to powder and flake size, generally below about 0.2 mm, the composition is deficient in modulus and strength for example tensile, flexural, and impact. Additionally the optical properties of the composition are not as strong i.e. lower clarity.

Additionally many other interesting effects are noted for these compositions. For example the glass fiber in combination with the PC and PCCD provides significantly better optical properties for these transparent/translucent blends than the glass fiber with either the PC alone or the PCCD alone. The inventive blend possesses better optical and impact strength than the blend without PCCD particularly from the yellowness and transparency aspects.

Additional properties may be noted from the experiments below. In these experiments comparative examples are denoted by alphabet letters while inventive compositions are denoted by arabic numerals.

The compositions are prepared by standard means employed in the art, for example the glass fiber being added downstream in the extruder or at the feedthroat.

The ingredients of the examples shown below in Tables, were tumble blended and then extruded on a 30 mm Werner Pfleiderer Single or Twin Screw Extruder with a vacuum vented mixing screw, at a barrel and die head temperature between 260-280 °C and 200-300 rpm screw speed. The extrudate was cooled through a water bath prior to pelletizing. Test parts were injection molded on a van Dorn molding machine with a set temperature of approximately 260-280 °C. The pellets were dried under vacuum overnight prior to injection molding.

Tensile properties were tested on "dog bone" ― 150mm x 10mm x 4mm (length x width x thickness) injection molded bars at room temperature with a crosshead speed of 5 mm/min.for filled samples and 50 mm/min for unfilled samples using ISO method 527.

Flex properties were tested on 80mm x 10mm x 4mm (length x width x thickness) injection molded bars at room temperature with a crosshead speed of 2 mm/min. using ISO method 178.

Vicat properties were measured on 10mm x 10mm x 4mm (length x width x thickness) injection molded parts following ISO 306 using a heating rate of 120°C/hr.

The optical measurements such as % transmission, haze and yellowing index (YI) were run on Haze-guard dual from BYK-Gardner via test ASTM D1003.

Color measurements were made on 100 mm diam and 3.2 mm thickness injection molded parts using Color-Eye 7000 from Gretag Macbeth.

Flex plate (dynatup tests) were tested on 100 mm diam and 3.2 mm thickness injection molded disks at room temperature using ISO method 130.

CTE measurements were conducted on 10mm x 10mm x 4mm (length x width x thickness) injection molded parts and were conducted following ISO method 11359-2 on TMA-7 from Perkin Elmer.

Izod measurements were conducted on 10mm x 10mm x 4mm (length x width x thickness) injection molded parts and were conducted following ISO 180 at room temperature using a pendulum of 5.5 J.

Example 1: The following examples illustrate the use of two blended homopolymers (PC & PCCD) providing better optical properties for the transparent composite blend versus the glass filled homopolymers. A dramatic increase in the transmission value and decrease in haze value is obtained when using a combination of PC&PCCD over a wide range of ratios versus just PC-glass or PCCD-glass.

**Table 1**

| | A | B | C | 1 | 2 | 3 | 4 | 5 |
|---|---|---|---|---|---|---|---|---|
| PC | 70 | - | 65 | 30 | 38 | 45 | 56 | 65 |
| PCCD | 0 | 70 | 35 | 40 | 31 | 25 | 14 | 5 |
| Glass % | 30 | 30 | - | 30 | 30 | 30 | 30 | 30 |
| Transmission (%) | 34 | 43 | 86 | 62 | 70 | 68 | 64 | 58 |

Example 2 : The following example illustrates the PC-PCCD blend with glass has good mechanical properties like that of the PC-glass blend but possesses much better optical and impact properties. From a color standpoint, the blend is less "yellow" (lower 'b' value) and more "transparent" (higher 'L' value) compared to PC-glass.

**Table 2**

| | D | 6 |
|---|---|---|
| PC % | 90 | 58.5 |
| PCCD % | - | 31.5 |
| Glass % | 10 | 10 |
| Flex Modulus (Mpa) | 3000 | 2900 |
| Transmission | 59.5 | 85.6 |
| Color - L | 85.7 | 95.7 |
| Color - b | 26.0 | 1.6 |
| Flex plate energy @ brk (J) | 19.5 | 37.8 |

Example 3: The following examples illustrate the PC-PCCD with glass has improved mechanical, heat and CTE properties relative to the blend without glass while still maintaining the optical properties.

**Table 3**

| | E | 7 | 8 | 9 |
|---|---|---|---|---|
| PC | 6 | 58. | 5 | 45. |
| PCC | 3 | 31. | 2 | 24. |
| Glass | - | 1 | 2 | 3 |
| Transmission | 8 | 8 | 7 | 6 |
| Tensile | 20 | 30 | 46 | 70 |
| Vicat | 11 | 12 | 12 | 12 |
| CTE (20-80°C) (*10⁻⁵) | 8 | 6.4 | 4.5 | 3.6 |

Example 4: The following example illustrates the ITR20-PCCD blend with glass ITR20 is the block copolyestercarbonate where the ester (block) content is 20 mol%. The block is the ester formed from terepthalic/isophthalic acid and 1,3-resorcinol.
ITR20 is sold by GE Plastics as Sollx. This blend has dramatically improved mechanical, heat and CTE properties relative to the blend without glass.

**Table 4**

| | F | 10 |
|---|---|---|
| ITR20% | 60 | 54 |
| PCCD% | 40 | 36 |
| Glass% | - | 10 |
| Transmission (%) | 88 | 87 |
| Tensile Modulus (Mpa) | 1848 | 2920 |
| Vicat (deg.C) | 108 | 114 |
| CTE (20-80°C) (*10⁻⁵) | 10.1 | 5.3 |

Example 5: The following examples illustrate how the addition of another polyester (PCTG) to the PC-PCCD-glass blend can improve the impact properties while maintaining optical properties.

**Table 5**

| | G | 11 | 12 |
|---|---|---|---|
| PC% | 58.5 | 55 | 49 |
| PCCD% | 31.5 | 30 | 27 |
| PCTG% | - | 5 | 14 |
| Glass % | 10 | 10 | 10 |
| Transmission | 85.4 | 85 | 85.4 |
| Unnotched Izod (kJ/m²) | 59.2 | 66.3 | 63.5 |
| Energy @ brk (J) | 37.8 | 49.1 | 43.8 |

Example 6: The following examples illustrate how the PC-PCCD-PCTG blend with glass has improved mechanical, and heat properties relative to the blend without glass while maintaining optical properties.

**Table 6**

| | I | J | 14 | 15 |
|---|---|---|---|---|
| PC/PCCD | 65/3 | 65/3 | 65/3 | 65/3 |
| PCTG-level | 5 | 14 | 5 | 14 |
| Glass | - | - | 10 | 10 |
| Transmission | 86 | 86 | 85 | 85 |
| Tensile modulus | 195 | 188 | 294 | 302 |
| Vicat °C | 114. | 111. | 120. | 117. |

Example 7: The following example illustrates the importance of extruder design as optical and mechanical properties are improved for the glass filled composite when extruded in a single screw versus a twin-screw extruder.

**Table 7**

| | H | 13 |
|---|---|---|
| Extruder | Twin | Single |
| PC-level | 45 | 45 |
| Polyester-type | PCCD | PCCD |
| Polyester-level | 25 | 25 |
| Glass % | 30 | 30 |
| Transmission | 61 | 68 |
| Tensile modulus (MPa) | 6792 | 7860 |
| Vicat (°C) | 123.7 | 127.5 |

## Claims

1. A translucent or transparent composite composition comprising
a. an aromatic polycarbonate (PC) and poly(1,4-cyclohexane dimethyl-1,4-cyclohexanedicarboxylate) (PCCD), the weight ratio of PC to PCCD being in the range of 30 to 85 PC to 70 to 15 PCCD,
b. glass fiber at least 0.75 mm in length the quantity of glass fiber being from 1 to 50 wt.% of the composition,
c. the refractive index of the polycarbonate and PCCD closely matching the refractive index of the glass fiber and being in the range of from 1.540 to 1.570.

2. The composition in accordance with claim 1 wherein the weight ratio of polycarbonate to PCCD is 55 to 75 PC to 45 to 25 PCCD.

3. The composition in accordance with claim 1 or claim 2 wherein the amount of glass fiber is from 5 to 30 wt.%.

4. The composition in accordance with claim 3 wherein the aromatic polycarbonate is bisphenol-A polycarbonate.

5. A translucent or transparent composite composition comprising
a. a copolyestercarbonate and poly(1,4-cyclohexane dimethyl-1,4-cyclohexanedicarboxylate) (PCCD), the weight ratio of copolyestercarbonate to PCCD in the range of 30 to 85 PC to 70 to 15 PCCD,
b. glass fiber at least 0.75 mm in length, the quantity of glass fiber being from 1 to 50 wt.% of the composition,
c. the refractive index of the copolyestercarbonate and PCCD closely matching the refractive index of the glass fiber and being in the range of from 1.508 to 1.585.

6. The composition in accordance with claim 5 wherein the copolyestercarbonate has ester bonds of the residue selected from the group consisting of terephthalic acid, isophthalic acid and mixtures thereof, with 1,3-resorcinol ; and carbonate bonds are the residue of bisphenol A and carbonate precursors.

7. The composition of claim 6 wherein the ester groups are in block form.

## Patentansprüche

1. Lichtdurchlässige oder transparente Verbundstoffzusammensetzung, umfassend:
a. ein aromatisches Polycarbonat (PC) und Poly(1,4-cyclohexandimethyl-1,4-cyclohexandicarboxylat) (PCCD), wobei das Gewichtsverhältnis von PC zu PCCD in dem Bereich von 30 bis 85 PC zu 70 bis 15 PCCD liegt;
b. Glasfaser von wenigstens 0,75 mm Länge, wobei die Menge von Glasfaser 1 bis 50 Gew.-% der Zusammensetzung beträgt;
c. wobei der Brechungsindex des Polycarbonats und des PCCD eng mit dem Brechungsindex der Glasfaser übereinstimmt und in dem Bereich von 1,540 bis 1,570 liegt.

2. Zusammensetzung nach Anspruch 1, wobei das Gewichtsverhältnis von Polycarbonat zu PCCD 55 bis 75 PC zu 45 bis 25 PCCD beträgt.

3. Zusammensetzung nach Anspruch 1 oder Anspruch 2, wobei die Menge von Glasfaser 5 bis 30 Gew.-% beträgt.

4. Zusammensetzung nach Anspruch 3, wobei das aromatische Polycarbonat Bisphenol-A-Polycarbonat ist.

5. Lichtdurchlässige oder transparente Verbundstoffzusammensetzung, umfassend:
a. ein Copolyestercarbonat und Poly(1,4-cyclohexandimethyl-1,4-cyclohexandicarboxylat) (PCCD), wobei das Gewichtsverhältnis von Copolyestercarbonat zu PCCD in dem Bereich von 30 bis 85 PC zu 70 bis 15 PCCD liegt;
b. Glasfaser von wenigstens 0,75 mm Länge, wobei die Menge von Glasfaser 1 bis 50 Gew.-% der Zusammensetzung beträgt;
c. wobei der Brechungsindex des Copolyestercarbonats und des PCCD eng mit dem Brechungsindex der Glasfaser übereinstimmt und in dem Bereich von 1,508 bis 1,585 liegt.

6. Zusammensetzung nach Anspruch 5, wobei das Copolyestercarbonat Esterbindungen des Restes, der aus der Gruppe bestehend aus Terephthalsäure, Isophthalsäure und Mischungen davon ausgewählt ist, mit 1,3-Resorcinol aufweist; und Carbonatbindungen der Rest von Bisphenol A und Carbonatvorläufern sind.

7. Zusammensetzung nach Anspruch 6, wobei die Estergruppen in Blockform sind.

## Revendications

1. Composition composite translucide ou transparente, comprenant :
a. un polycarbonate aromatique (PC) et un poly(1,4-cyclohexane diméthyl-1,4-cyclohexanedicarboxylate) (PCCD), dont le rapport pondéral entre le PC et le PCCD se trouve dans la gamme de 30 à 85 pour le PC / de 70 à 15 pour le PCCD,
b. de la fibre de verre ayant au moins une longueur de 0,75 mm, la quantité de fibre de verre représentant de 1 à 50% en poids de la composition,
c. l'indice de réfraction du polycarbonate et du PCCD correspondant étroitement à l'indice de réfraction de la fibre de verre et se situant dans la gamme de 1,540 à 1,570.

2. Composition selon la revendication 1, le rapport pondéral entre le polycarbonate et le PCCD étant de 55 à 75 pour le PC / de 45 à 25 pour le PCCD.

3. Composition selon la revendication 1 ou la revendication 2, la quantité de fibre de verre représentant de 5 à 30% en poids.

4. Composition selon la revendication 3, le polycarbonate aromatique étant un polycarbonate de bisphénol-A.

5. Composition composite translucide ou transparente, comprenant :
a. un copolyestercarbonate et un poly (1,4-cyclohexane diméthyl-1,4-cyclohexanedicarboxylate) (PCCD), dont le rapport pondéral entre le copolyestercarbonate et le PCCD se trouve dans la gamme de 30 à 85 pour le PC / de 70 à 15 pour le PCCD,
b. de la fibre de verre ayant au moins une longueur de 0,75 mm, la quantité de fibre de verre représentant de 1 à 50% en poids de la composition,
c. l'indice de réfraction du copolyestercarbonate et du PCCD correspondant étroitement à l'indice de réfraction de la fibre de verre et se situant dans la gamme de 1,508 à 1,585.

6. Composition selon la revendication 5, le copolyestercarbonate possédant des liaisons d'ester du résidu sélectionné parmi le groupe constitué d'acide téréphtalique, d'acide isophtalique et de mélanges de ceux-ci avec le 1,3-résorcinol ; les liaisons de carbonate étant les résidus du bisphénol-A et des précurseurs de carbonate.

7. Composition selon la revendication 6, les groupes esters se présentant sous la forme de blocs.
